# EUROPÄISCHE PATENTSCHRIFT

(11) **EP 0 399 246 B1**
(45) Veröffentlichungstag und Bekanntmachung des Hinweises auf die Patenterteilung: **29.12.1993**
(21) Anmeldenummer: 90108196.8
(22) Anmeldetag: 28.04.1990
(51) Int. Cl.: C21D 9/30

(54) **Verfahren zur Steigerung der Dauerfestigkeit von Kurbelwellen für Kolbenmaschinen, insbes. Brennkraftmaschinen**
Process for increasing the creep rupture strength of crankshafts for piston engines, especially for internal-combustion engines
Procédé pour augmenter la résistance au fluage de vilebrequins pour machines à piston, en particulier pour moteurs à combustion interne

(30) Priorität: 19.05.1989 DE 3916421
(43) Veröffentlichungstag der Anmeldung: 28.11.1990
(73) Patentinhaber: MAN Nutzfahrzeuge Aktiengesellschaft, 80976 München (DE)
(72) Erfinder: Deschler, Gerhard, Dipl.-Ing., D-8500 Nürnberg (DE)

(56) Entgegenhaltungen:
- DE-A- 2 930 968
- FR-A- 1 139 956
- US-A- 3 108 913
- US-A- 4 043 847
- MTZ, Band 24, Heft 4, April 1963, Seite 146, Stuttgart, DE; "Das Festwalzen von Kurbelwellen"
- MTZ, Band 28, Heft 6, 1967, Seiten 223,224, Stuttgart, DE; "Festwalzen an fertigbearbeiteten Kurbelwellen"

## Beschreibung

Die Erfindung bezieht sich auf ein Verfahren zur Steigerung der Dauerfestigkeit von Kurbelwellen für Kolbenmaschinen, insbesondere Brennkraftmaschinen, bei der die Übergangsradien von einem Kurbelzapfen zu angrenzenden Kurbelwangen einer Härtung unterzogen werden.

Leistungssteigerung bei Brennkraftmaschinen wird durch Aufladung erzielt, was eine Erhöhung der mechanischen Kräfte im gesamten Kolbentrieb zur Folge hat. Andererseits ist es erwünscht, bei Baureihen zur Kosteneinsparung auf die Neukonstruktion und Neuberechnung von Bauteilen so weit als möglich zu verzichten.

Aus US-A-31 08 913 ist es bekannt, die Oberfläche von Kurbelzapfen und deren Übergangsradien zu den Kurbelwangen induktiv zu härten, um Kurbelwellenbrüche zu vermeiden. Der Einfluß der Rauhtiefe für die Dauerfestigkeit ist unberücksichtigt, obwohl die Rauhtiefe die Herstellungskosten einer Kurbelwelle wesentlich mitbestimmt, insbesondere bei einem Massenartikel, wie ihn die Kurbelwelle eines Nutzfahrzeuges zweifelsohne darstellt.

Die Härtung von Übergangsradien an gefährdeten Stellen einer Kurbelwelle, beispielsweise von einem Kurbelzapfen zu einer schwächeren Kurbelwange ist aus FR-A-139 956 vorbekannt. Auch hier bleibt der Einfluß der Rauhtiefe auf die Dauerfestigkeit unberücksichtigt, mit der Folge, daß überhöhte Herstellungskosten anfallen.

Aus DE-A-29 30 968 ist es bekannt, die Rauhtiefe den örtlich auftretenden Spannungsspitzen anzupassen. Der Einfluß der Oberflächenhärtung auf die Dauerfestigkeit wird nicht ausgenutzt, so daß die Kurbelwelle vom Standpunkt der Festigkeit her gesehen nicht optimiert ist. Die Herstellungskosten werden auch nicht nachhaltig gesenkt, da unterschiedliche Rauhtiefen bei Hauptlagerzapfen bis 2 µm und bei Pleuellagerzapfen bis 1,5 µm verschiedene Arbeitsgänge erfordern.

Ausgehend von einem Herstellungsverfahren gemäß dem Gattungsbegriff liegt der Erfindung die Aufgabe zugrunde, die Dauerfestigkeit von Kurbelwellen im Bereich des Übergangs von Kurbelzapfen zu Kurbelwange ohne Veränderung der Geometrie und ohne aufwendige Oberflächenbearbeitung zu erhöhen.

Ausgehend von einem Verfahren gemäß dem Gattungsbegriff wird diese Aufgabe dadurch gelöst, daß die Härtung im Bereich der Übergangsradien bis zu einer Härtetiefe von 2 bis 3 mm vorgenommen wird und eine Oberflächenbearbeitung in einem Teilbereich reichend von einer Verschneidungskante zwischen den Übergangsradien bis zu einem Anlaufbund auf eine Rauhtiefe RZ größer als 6,3 µm beschränkt wird.

Durch die Härtung der Übergangsradien wird die Verringerung der Dauerfestigkeit als Folge der größeren Rauhtiefe überkompensiert, d. h., die Dauerfestigkeit nimmt im Übergangsbereich von Kurbelzapfen zur Kurbelwange durch die lokale Härtung mehr zu, als sie durch die größere Rauhtiefe infolge gröberer Oberflächenbearbeitung abnimmt. Die Härtung ist eine wesentlich kostengünstigere Bearbeitung als das Feinschleifen und Polieren der Oberfläche auf Rauhtiefen unter 6,3 µm.

Durch das erfindungsgemäße Verfahren ist es möglich in einer Bauserie - beispielsweise durch Aufladung - die Leistung zu erhöhen, ohne daß die Kurbelwelle geometrisch verändert werden muß, was immer mit hohem Konstruktionsaufwand und einer Umstellung der Bearbeitungsmaschinen verbunden ist. Andererseits ist man nicht genötigt, die in der Kurbelwelle auftretende Spannungserhöhung durch die erhöhte Belastung des Kolbentriebs dadurch abzufangen, daß die Oberflächengüte über das vertretbare Maß hinaus verbessert wird, um den Einfluß der Mikrokerbwirkung zu verringern. Das erfindungsgemäße Verfahren ist das probate Mittel die Geometrie der Kurbelwelle beizubehalten, ohne daß übertriebener fertigungstechnischer Aufwand zu treiben wäre.

Eine vorteilhafte Weiterbildung des erfindungsgemäßen Verfahrens besteht darin, daß die Rauhtiefe RZ im Bereich der Übergangsradien und Anlaufbünde gleich groß ist.

Eine vorteilhafte Ausbildung des erfindungsgemäßen Verfahrens ist darin zu sehen, daß die Rauhtiefe RZ im Bereich der Übergangsradien und Anlaufbünden gleich groß ist. Durch diese Maßnahme wird die Bearbeitung vereinfacht, da Übergangsradius und Anlaufbund in einem Arbeitsgang bearbeitet werden können.

Das Verfahren ist am Beispiel eines Ausschnitts einer Kurbelwelle in Zeichnungen dargestellt. Es zeigt:
- Figur 1: einen Ausschnitt aus einer Kurbelwelle
- Figur 2: eine detaillierte Darstellung eines Übergangsbereichs von einem Kurbelzapfen zu einer Kurbelwange

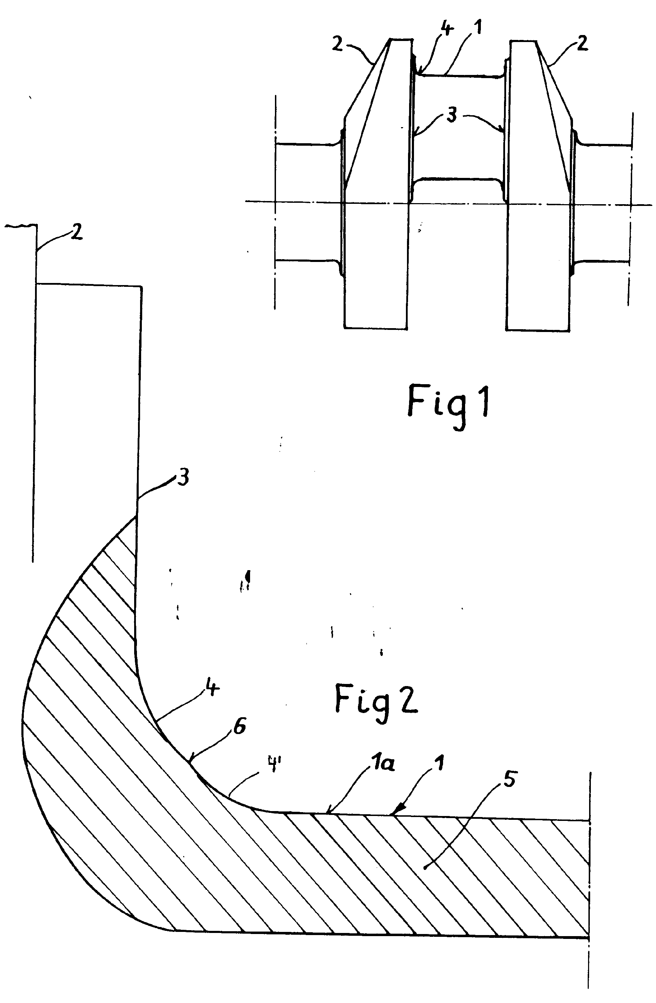

Figur 1 zeigt einen Ausschnitt einer Kurbelwelle mit einem Kurbelzapfen 1, angrenzenden Kurbelwangen 2 und Anlaufbünden 3. Der Übergang vom Kurbelzapfen 1 zur angrenzenden Kurbelwange 2 erfolgt über Übergangsradien 4',4. Diese Übergangsradien 4',4 sind von einer Spannungskonzentration gekennzeichnet, wie es bei jedem Übergang von einem Durchmesser zu einem anderen Durchmesser der Fall ist. Da bei einer Leistungssteigerung der Maschine beispielsweise durch Aufladung die Dauerfestigkeit der Kurbelwelle in dieser Zone schnell überschritten ist, jedoch eine Neudimensionierung aus Kostengründen wenn nur irgendwie möglich umgangen werden soll, muß man auf Abhilfe sinnen. Dazu wird nach bekanntem Stand der Technik die Oberflächengüte der Übergangsradien durch Feinschleifen und Polieren auf Rauhtiefen kleiner 6,3 µm verbessert, wodurch sich die Mikrokerbwirkung reduziert, so daß die Dauerfestigkeit zunimmt. Dies ist jedoch erfahrungsgemäß eine teuere Maßnahme.

Durch das erfindungsgemäße Verfahren wird statt dessen vorgeschlagen, die Oberflächengüte in dem Teilbereich 4 der Übergangsradien 4',4 auf Rauhtiefen "RZ" von 6,3 µm bis hinauf zu 25 µm zu verringern und im Ausgleich dazu den Bereich der Übergangsradien 4',4 einer Härtung zu unterziehen.

Die Härtetiefe sollte ca. 2 bis 3 mm betragen. Die Erhitzung im Oberflächenbereich kann üblicherweise induktiv erfolgen, zur Abschreckung wird mit Wasser abgekühlt.

Ein Detail mit den Übergangsradien 4',4 ist in Figur 2 dargestellt. Der Übergangsradius 4 beginnt an einer Verschneidungskante 6 zwischen einer Lagerstelle 1a des Kurbelzapfens 1 und dem Übergang zum Anlaufbund 3. Dieser Übergangsradius 4 vom Kurbelzapfen 1 zum Anlaufbund 3 der Kurbelwange 2 ist bis zu einer Tiefe von 2 bis 3 mm induktiv gehärtet. Die Rauhtiefe beträgt 6,3 µm bis hinaus zu 25 µm und macht daher keine all zu aufwendige Oberflächenbearbeitung erforderlich. Lediglich die Lagerstelle 1a wird noch mit einer Rauhtiefe kleiner 6,3 µm berbeitet, um die Lagerfunktion zu gewährleisten. Von besonderem Vorteil für die Bearbeitung ist die Tatsache, daß für den Übergangsradius 4 und den Anlaufbund 3 eine gleiche Rauhtiefe vorgesehen werden kann, so daß die Bearbeitung beider Teile in einem Zuge erfolgen kann. Die Härtezone 5 mit einer Tiefe von 2 bis 3 mm ist durch Schraffur gekennzeichnet.

## Patentansprüche

1. Verfahren zur Erhöhung der Dauerfestigkeit von Kurbelwellen für Kolbenmaschinen, insbesondere Brennkraftmaschinen, bei der die Übergangsradien von einem Kurbelzapfen zu angrenzenden Kurbelwangen einer Härtung unterzogen werden, dadurch gekennzeichnet, daß die Härtung im Bereich der Übergangsradien (4',4) bis zu einer Härtetiefe von 2 bis 3 mm vorgenommen wird und eine Oberflächenbearbeitung in einem Teilbereich (4) reichend von einer Verschneidungskante (6) zwischen den Übergangsradien (4',4) bis zu einem Anlaufbund (3) auf eine Rauhtiefe RZ größer 6,3 µm beschränkt wird.

2. Verfahren nach Anspruch 1, dadurch gekennzeichnet, daß die Rauhtiefe RZ im Bereich der Übergangsradien (4) und Anlaufbünde (3) gleich groß ist.

## Claims

1. A process for increasing the fatigue strength of crankshafts for piston engines, in particular internal combustion engines, in which the transitional radii from a crank pin to adjacent crank webs are subjected to hardening, **characterised in that** hardening is carried out to a depth of hardness of 2 to 3 mm in the region of the transitional radii (4', 4), and a surface treatment in a partial region (4) extending from an intersection edge (6) between the transitional radii (4',4) to a stop collar (3) is restricted to a surface roughness RZ greater than 6.3 µm.

2. A process according to Claim 1, **characterised** **in that** the surface roughness RZ is equally great in the region of the transitional radii (4) and the stop collars (3).

## Revendications

1. Procédé pour l'augmentation de la résistance limite d'endurance de vilebrequins de machines à pistons, notamment des moteurs à combustion interne, dans lesquelles les congés de raccordement d'un maneton aux joues qui l'encadrent subissent un traitement de durcissement, caractérisé en ce que le traitement dans la zone des congés de raccordement (4, 4') est effectué jusqu'à une profondeur de durcissement de 2 à 3 mm tandis qu'un usinage de la surface de la zone (4) allant de l'arête d'intersection (6) des congés de raccordement (4', 4) à une bride d'appui (3), est limité à une profondeur de rugosité RZ supérieure à 6,3 microns.

2. Procédé selon la revendication 1, caractérisé en ce la profondeur de rugosité RZ est la même dans le congé de raccordement (4) et dans la bride d'appui (3).
